# EUROPEAN PATENT APPLICATION

(11) **EP 2 518 862 A1**
(43) Date of publication of application: **31.10.2012**
(21) Application number: 09852510.8
(22) Date of filing: 25.12.2009
(51) Int. Cl.: H02J 17/00

(54) **WIRELESS POWER TRANSMISSION DEVICE AND POWER RECEIVING DEVICE**

(71) Applicant: Kabushiki Kaisha Toshiba, Minato-ku Tokyo 105-8001 (JP)
(72) Inventor: KASHIWAGI, Ippei, Minato-ku Tokyo (JP); OODACHI, Noriaki, Minato-ku, Tokyo (JP); SHOKI, Hiroki, Minato-ku Tokyo (JP)
(74) Representative: HOFFMANN EITLE
(86) International application number: PCT/JP2009/007239
(87) International publication number: WO 2011/077493

(57) **Abstract**

A wireless power transmission device (1) supplies power to a power receiving device (2) including a second self-resonant coil (202) having a winding structure in which a conductive wire is wound one turn or more perpendicularly to a second central axis. The wireless power transmission device (1) includes: a first self-resonant coil (102) having a winding structure in which a conductive wire is wound one turn or more perpendicularly to a first central axis and supplying power to the second self-resonant coil (202) not being on the first central axis; and a third self-resonant coil (302) having a winding structure in which a conductive wire is wound one turn or more perpendicularly to a third central axis not being orthogonal to the first central axis and disposed on the first central axis. The degree of freedom of arrangement of the power receiving device (2) with respect to the wireless power transmission device (1) can be improved.

## Description

### TECHNICAL FIELD

The present invention relates to a wireless power transmission device that transmits power wirelessly and a power receiving device that receives power wirelessly.

### BACKGROUND ART

In recent years, wireless power transmission technology that transmits power in a noncontact manner by using a power transmitting coil included in a wireless power transmission device and a power receiving coil included in a power receiving device has been adopted in many devices such as IC cards, mobile phones, electric toothbrushes, and shavers.

Power transmission technology using a resonance phenomenon by resonant coils has been known as the wireless power transmission technology (for example, Patent Literature 1).

### CITATION LIST

### PATENT LITERATURE

PLT 1: WO2008/118178

### SUMMARY OF THE INVENTION

### TECHNICAL PROBLEM

In power transmission described in Patent Literature 1, transmission efficiency is significantly decreased depending on the orientation of a power receiving coil with respect to a power transmitting coil. When, for example, the power transmitting coil and the power receiving coil have a winding structure in which a conductive wire is wound one turn or more perpendicularly to a respective central axis, if the central axes intersect with each other at right angles and one central axis is arranged on the other central axis (for example, the power transmitting coil is arranged on the central axis of the power receiving coil), it becomes difficult to transmit power from the power transmitting coil to the power receiving coil.

Thus, there has been a problem that the physical relationship between a power transmitting coil and a power receiving coil is limited and the arrangement of a power receiving device containing the power receiving coil is limited to transmit power from the power transmitting coil to the power receiving coil with stability.

The present invention is made to solve the above problem and an object thereof is to provide a wireless power transmission device capable of transmitting power to a power receiving device arranged in a position where it has been difficult to transmit power and improving the degree of freedom of arrangement of the power receiving device.

### SOLUTION TO PROBLEM

A wireless power transmission device according to an aspect of the present invention is a wireless power transmission device that supplies power to a power receiving device including a second self-resonant coil having a winding structure in which a conductive wire is wound one turn or more perpendicularly to a second central axis, including a first self-resonant coil having the winding structure in which the conductive wire is wound one turn or more perpendicularly to a first central axis to supply the power to the second self-resonant coil that is not located on the first central axis and a third self-resonant coil having the winding structure in which the conductive wire is wound one turn or more perpendicularly to a third central axis that is not perpendicular to the first central axis and arranged on the first central axis.

### ADVANTAGEOUS EFFECTS OF INVENTION

According to the present invention, a wireless power transmission device capable of improving the degree of freedom of arrangement of a power receiving device can be provided.

### BRIEF DESCRIPTION OF THE DRAWINGS

FIG. 1 is a diagram showing the configuration of a wireless power transmission system according to a first embodiment of the present invention.
FIG. 2 is a diagram showing an example of physical relationships of first to third self-resonant coils in the first embodiment.
FIG. 3A is a diagram showing arrangement of the first and second self-resonant coils.
FIG. 3B is a diagram showing a simulation result of the relationship between the arrangement of the first and second self-resonant coils and power transmission efficiency.
FIG. 4A is a diagram showing an electromagnetic field simulation result of a near magnetic field when the third self-resonant coil is absent.
FIG. 4B is a diagram showing a simulation result of the relationship between a frequency and power transmission efficiency when the third self-resonant coil is absent.
FIG. 5A is a diagram showing an electromagnetic field simulation result of the near magnetic field in a wireless power transmission device according to the first embodiment.
FIG. 5B is a diagram showing a simulation result of the relationship between the frequency and power transmission efficiency in the wireless power transmission device according to the first embodiment.
FIG. 6 is a diagram showing an example of the physical relationships of first to fourth self-resonant coils in a first modification of the first embodiment.
FIG. 7 is a diagram showing an example of the physical relationships of first to third self-resonant coils in a second embodiment.
FIG. 8 is a diagram illustrating the physical relationships of the first to third self-resonant coils in the second embodiment.
FIG. 9 is a diagram illustrating the physical relationships of the first to third self-resonant coils in the second embodiment.
FIG. 10 is a diagram showing an example of the physical relationships of first to fourth self-resonant coils in a first modification of the second embodiment.
FIG. 11 is a diagram showing an example of the physical relationships of first to third self-resonant coils in a third embodiment.
FIG. 12 is a diagram showing an application example of a wireless power device and a power receiving device in the third embodiment.
FIG. 13 is a diagram showing an example of the physical relationships of first to fifth self-resonant coils in a fourth embodiment.
FIG. 14 is a diagram showing the configuration of a wireless power transmission system according to a fifth embodiment of the present invention.

### DESCRIPTION OF EMBODIMENTS

The embodiments of the present invention will be described below using drawings.

### <First Embodiments>

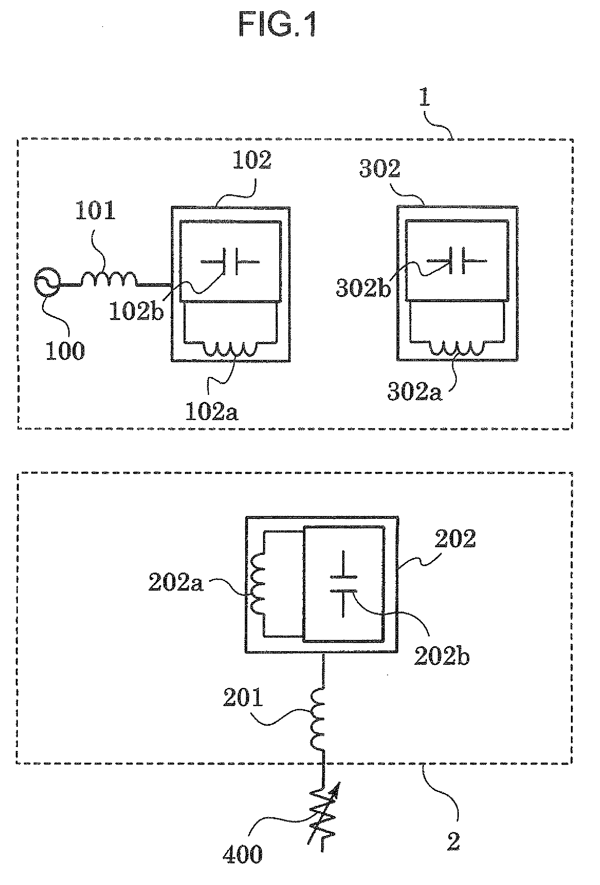

A wireless power transmission system according to the first embodiment of the present invention will be described. The wireless power transmission system shown in FIG. 1 includes a wireless power transmission device 1 and a power receiving device 2 to which power (energy) is supplied from the wireless power transmission device 1.

The wireless power transmission device 1 includes first and third self-resonant coils 102, 302. The self-resonant coil is a coil that resonates at a predetermined frequency with an inductor and a self-stray capacitance of the coil. In FIG. 1, the self-resonant coil is shown as an equivalent circuit of an inductor and a capacitor. The inductor of the first self-resonant coil 102 shown in the equivalent circuit of FIG. 1 is called a first power transmitting coil 102a and the capacitor shown therein is called a first capacitor 102b. The inductor of the third self-resonant coil 302 shown in the equivalent circuit of FIG. 1 is called a third power transmitting coil 302a and the capacitor shown therein is called a third capacitor 302b.

The wireless power transmission device 1 further includes a high-frequency power supply 100 and a first coil 101. Incidentally, the high-frequency power supply 100 may not be included in the wireless power transmission device 1 and may be, for example, an external power supply such as an outlet.

The first coil 101 is a coil whose winding number is, for example, 1. That is, the first coil 101 has a loop shape. An axis perpendicular to the plane containing the loop shape and passing through the center of the loop is called a central axis of the first coil. In other words, the first coil 101 has a structure in which a conductive wire is wound one turn perpendicularly to the central axis. Power is supplied to the first coil 101 from the high-frequency power supply 100.

The first self-resonant coil 102 is a coil whose winding number is, for example, n (n is an integer 1 or greater). An axis parallel to the orientation of a magnetic field generated inside the first self-resonant coil 102 and passing through the center of the first self-resonant coil 102 is called a central axis 1S of the first self-resonant coil 102. The first self-resonant coil 102 has a structure in which a conductive wire is wound N turns perpendicularly to the central axis 1S. If, for example, the first self-resonant coil has a cylindrical shape, the central axis 1S of the first self-resonant coil 102 is an axis passing through the center of the circle in a height direction of the cylinder. However, the shape of the first self-resonant coil is not limited to the cylindrical shape. For example, the shape of the first self-resonant coil 102 may be a square pole shape or a spiral shape.

The first self-resonant coil 102 is arranged in such a way that the central axis 1S of the first self-resonant coil 102 and the central axis of the first coil 101 match or central axis of the first self-resonant coil 102 passes through the loop of the first coil 101. By arranging the first self-resonant coil 102 as described above, when power is supplied from the high-frequency power supply 100 to the first coil 101, power is supplied from the first coil 101 to the first self-resonant coil 102 through electromagnetic induction. With power being supplied to the first self-resonant coil 102, a current flows to the first self-resonant coil 102 and a magnetic field is generated.

The third self-resonant coil 302 is a coil whose winding number is, for example, M (M is an integer 1 or greater). An axis parallel to the orientation of a magnetic field generated inside the third self-resonant coil 302 and passing through the center of the third self-resonant coil 302 is called a central axis 3S of the third self-resonant coil 302. The third self-resonant coil 302 has a structure in which a conductive wire is wound M turns perpendicularly to the central axis 3S. If, for example, the third self-resonant coil 302 has a cylindrical shape, the central axis of the third self-resonant coil 302 is an axis passing through the center of the circle in the height direction of the cylinder. However, the shape of the third self-resonant coil 302 is not limited to the cylindrical shape. For example, the shape of the third self-resonant coil 302 may be a square pole shape or a spiral shape.

In the present embodiment, the third self-resonant coil 302 is arranged in such a way that the central axis 3S of the third self-resonant coil 302 and the central axis 1S of the first self-resonant coil 102 match or the central axis 3S of the third self-resonant coil 302 passes through the first self-resonant coil 102. The third self-resonant coil 302 receives power through resonance of magnetic fields from the first self-resonant coil 102. As a result, a current flows to the third self-resonant coil 302 and a magnetic field is generated. Details of the arrangement of the first and third self-resonant coils 102, 302 will be described later.

The power receiving device 2 includes a second self-resonant coil 202 and a second coil 201.

The second self-resonant coil 202 is a coil whose winding number is, for example, L (L is an integer 1 or greater). An axis parallel to the orientation of a magnetic field generated inside the second self-resonant coil 202 and passing through the center of the second self-resonant coil 202 is called a central axis 2S of the second self-resonant coil 202. The second self-resonant coil 202 has a structure in which a conductive wire is wound L turns perpendicularly to the central axis 2S. If, for example, the second self-resonant coil 202 has a cylindrical shape, the central axis 2S of the second self-resonant coil 202 is an axis passing through the center of the circle in the height direction of the cylinder. However, the shape of the second self-resonant coil 202 is not limited to the cylindrical shape. For example, the shape of the second self-resonant coil 202 may be a square pole shape or a spiral shape. Details of the arrangement of the second self-resonant coil 202 will be described later. The second self-resonant coil 202 receives power through resonance of magnetic fields from the first self-resonant coil 102 and the third self-resonant coil 302.

The second self-resonant coil 202 is a coil that resonates at a predetermined frequency with an inductor and a self-stray capacitance of the coil. In FIG. 1, the self-resonant coil is shown as an equivalent circuit of an inductor and a capacitor. The inductor of the second self-resonant coil 202 shown in the equivalent circuit of FIG. 1 is called a second power transmitting coil 202a and the capacitor shown therein is called a second capacitor 202b.

The second coil 201 is a coil whose winding number is, for example, 1. That is, the second coil has a loop shape. An axis perpendicular to the plane containing the loop shape and passing through the center of the loop is called a central axis of the second coil. In other words, the second coil 201 has a structure in which a conductive wire is wound one turn perpendicularly to the central axis. Power is supplied to the second coil 201 from the second self-resonant coil 202 through electromagnetic induction.
Power supplied to the second coil 201 is supplied to an external load 400.

Next, the operation of a wireless power transmission system according to the present embodiment will be described. First, the high-frequency power supply 100 of the wireless power transmission device 1 outputs a high-frequency current having a predetermined frequency in a wireless frequency band to the first coil 101.

When the high-frequency current flows in the first coil 101, a magnetic field is generated around the first coil 101.

A current is induced in the first self-resonant coil 102 by the magnetic field generated around the first coil 101 and an induced current flows in the first self-resonant coil 102. Accordingly, a first vibrating magnetic field is generated around the first self-resonant coil 102. The first vibrating magnetic field is a magnetic field that vibrates at a predetermined frequency.

The third self-resonant coil 302 is resonated by the first vibrating magnetic field generated around the first self-resonant coil 102 and an induced current flows in the third self-resonant coil 302. With the current flowing in the third self-resonant coil 302, a second vibrating magnetic field vibrating at the same frequency as the frequency of the first vibrating magnetic field is generated around the third self-resonant coil 302. That is, power is supplied from the first self-resonant coil 102 to the third self-resonant coil 302 to generate the second vibrating magnetic field. The resonance frequency of the third self-resonant coil 302 is determined by each value of the inductance of the third power transmitting coil 302a and the capacitance of the third capacitor 302b shown in FIG. 1. In the present embodiment, the resonance frequency of the third self-resonant coil 302 is set to the same frequency as the resonance frequency of the first self-resonant coil 102.

Due to a resultant magnetic field of the first vibrating magnetic field and the second vibrating magnetic field, the second self-resonant coil 202 is resonated and a current flows in the second self-resonant coil 202. A current flows in the second self-resonant coil 202. With the current flowing in the second self-resonant coil 202, a third vibrating magnetic field vibrating at the same frequency as the frequency of the first vibrating magnetic field and the second vibrating magnetic field is generated around the second self-resonant coil 202. That is, power is supplied from the first self-resonant coil 102 and the third self-resonant coil to the second self-resonant coil 202 to generate the third vibrating magnetic field. The resonance frequency of the second self-resonant coil 202 is determined by each value of the inductance of the second power transmitting coil 202a and the capacitance of the second capacitor 202b shown in FIG. 1. In the present embodiment, the resonance frequency of the second self-resonant coil 202 is set to the same frequency as the resonance frequency of the first self-resonant coil 102.

Electromagnetic induction is caused by the third vibrating magnetic field, causing an induced current to flow in the second coil 201.

The induced current generated in the second coil 201 flows to the load 400 so that power consumed by the load 400 can be supplied.

According to the present embodiment, in addition to the first self-resonant coil 102, the third self-resonant coil 302 to which power is not directly supplied from the first coil 101 is provided in the wireless power transmission device 1. When the third self-resonant coil 302 is not present, if the central axes 1S, 2S intersect with each other at right angles and one central axis is arranged on the other central axis (for example, the second self-resonant coil 202 is arranged on the central axis 1S of the first self-resonant coil 102), it becomes difficult to transmit power from the first self-resonant coil 102 to the second self-resonant coil 202.

Even in a case of originally very bad transmission efficiency when the central axis 1S of the first self-resonant coil 102 and the central axis 2S of the second self-resonant coil 202 intersect with each other at right angles and the second self-resonant coil 202 is arranged on the central axis 1S of the first self-resonant coil 102, lines of magnetic force linked to the second self-resonant coil 202 can be increased by, like the wireless power transmission system in the present embodiment, arranging the third self-resonant coil 302.

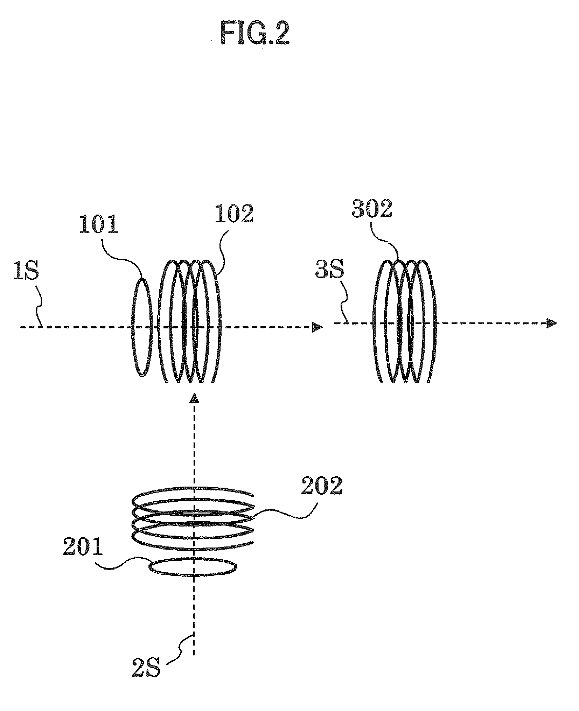

Increasing lines of magnetic force linked to the second self-resonant coil 202 by arranging the third self-resonant coil 302 will be described using FIGS. 2 to 5.

First, an example of the physical relationship between the first to third self-resonant coils 102 to 302 will be described using FIG. 2.

In FIG. 2, the first self-resonant coil 102 is arranged on the central axis 2S of the second self-resonant coil 202. The central axis 1S of the central axis 1S of the first self-resonant coil 102 and the central axis 2S of the second self-resonant coil 202 intersect with each other at right angles. The third self-resonant coil 103 is arranged on the central axis 1S of the first self-resonant coil 102. The central axis 3S of the third self-resonant coil 302 and the central axis 1S of the first self-resonant coil 102 match.

In the description that follows, the physical relationship between the first self-resonant coil 102 and the second self-resonant coil 202 shown in FIG. 1 will be expressed as "intersecting at right angles".

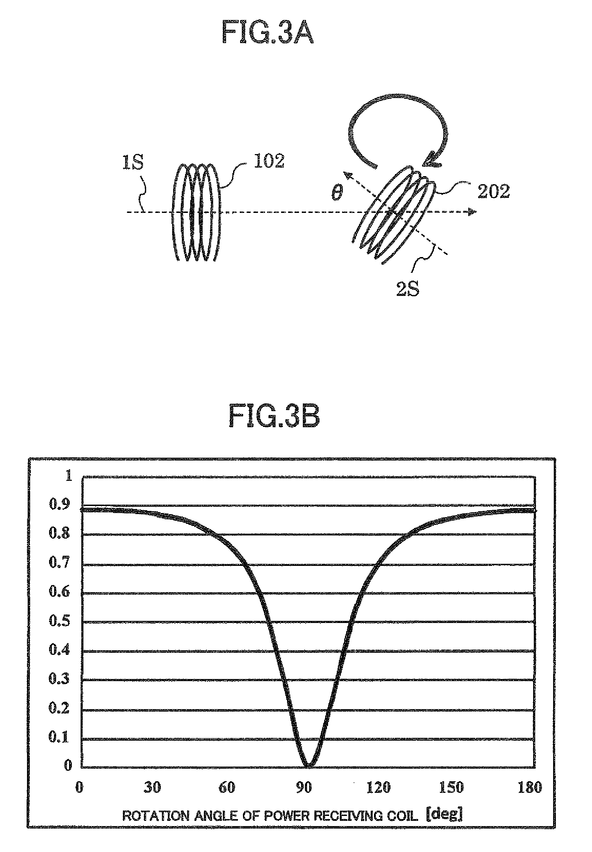

An influence of the orientation of the second self-resonant coil 202 with respect to the first self-resonant coil 102 on power transmission efficiency in a conventional case, that is, when the wireless power transmission device 1 does not include the third self-resonant coil 302 will be described using FIG. 3.

A simulation result of power transmission efficiency when, as is shown in FIG. 3A, the second self-resonant coil 202 is rotated to change the orientation is shown in FIG. 3B.

The horizontal axis of FIG. 3B represents a rotation angle θ [deg] when the power receiving coil (second self-resonant coil 202) is rotated from the position where the central axis 2S of the second self-resonant coil 202 and the central axis 1S of the first self-resonant coil 101 match. The vertical axis represents the power transmission efficiency at the angle θ.

As is evident from FIG. 3B, the power transmission efficiency abruptly drops when the rotation angle θ is near 90 degrees. The rotation angle of 90 degrees is when the second self-resonant coil 202 is installed in an orientation orthogonal to the first self-resonant coil 102. Thus, if the second self-resonant coil 202 is oriented perpendicularly to the first self-resonant coil 102 when the third self-resonant coil 302 is not included, the power transmission efficiency abruptly deteriorates. While the power transmission efficiency when the second self-resonant coil 202 is rotated is shown in FIG. 3, a result similar to FIG. 3B is obtained if the second self-resonant coil 202 is fixed and the first self-resonant coil 102 is rotated.

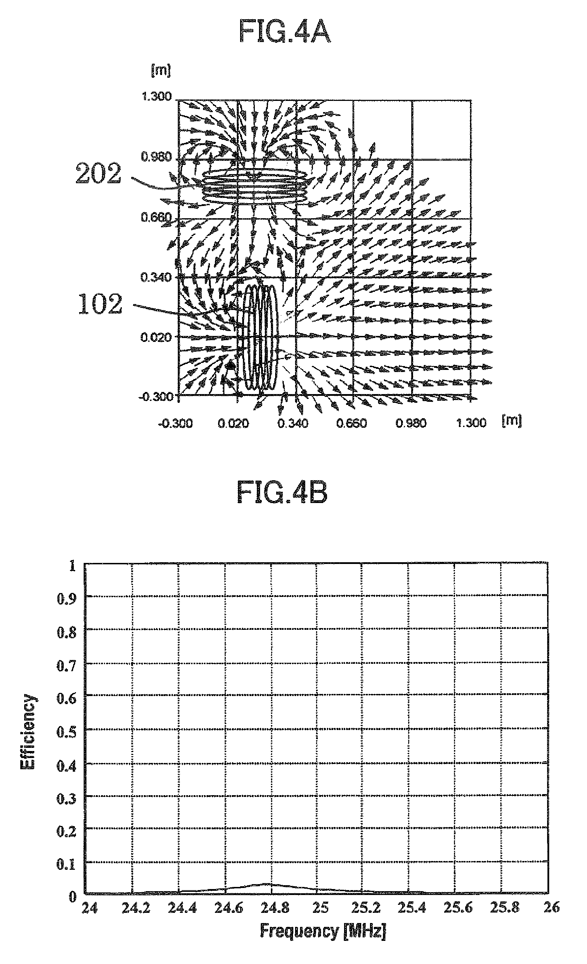

FIG. 4A shows an electromagnetic field simulation result of a near magnetic field when the first self-resonant coil 102 and the second self-resonant coil 202 are orthogonal. An arrow (vector) in FIG. 4A indicates the orientation of a magnetic field and the length thereof indicates the strength of the magnetic field.

FIG. 4B is a diagram showing a simulation result of changes of the power transmission efficiency with respect to the frequency. The horizontal axis of FIG. 4B represents the frequency (MHz) and the vertical axis thereof represents the power transmission efficiency.

Each vector shown in FIG. 4A indicates the orientation and magnitude of an electromagnetic field at each point. When the first self-resonant coil 102 and the second self-resonant coil 202 are orthogonal, as shown in FIG. 4A, the distribution of magnetic field near the second self-resonant coil 202 is weak and the electromagnetic coupling coefficient is small. As shown in FIG. 4B, the power transmission efficiency is a couple of percents near 24.8 MHz and overall efficiency is clearly low even if the frequency is changed.

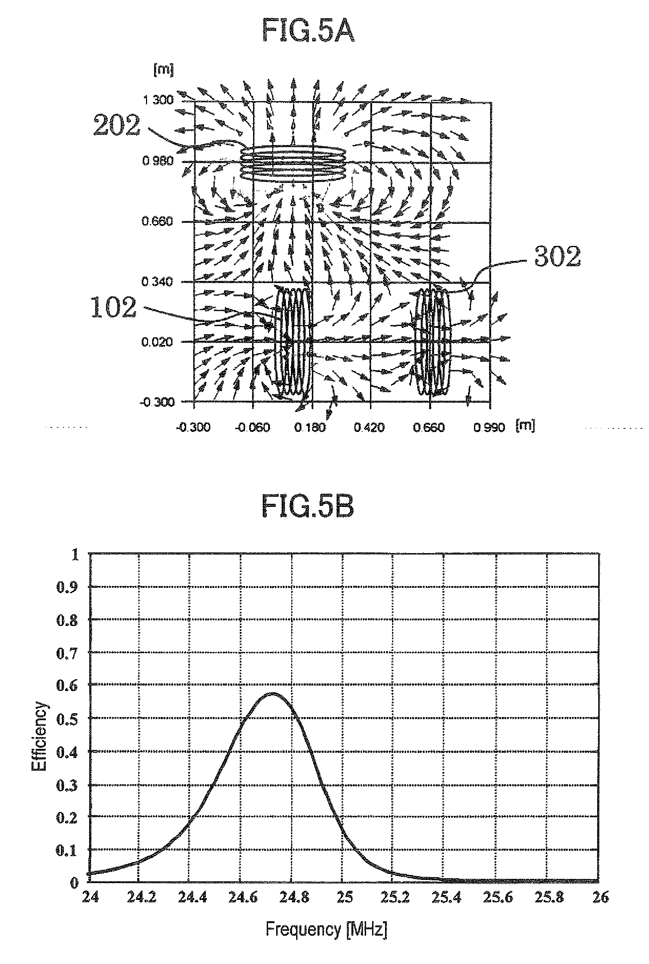

Next, power transmission characteristics of the wireless power transmission device 1 in the first embodiment, that is, when the third self-resonant coil 302 is included, will be described. FIG. 5A shows an electromagnetic field simulation result of the near magnetic field when the first self-resonant coil 102 and the second self-resonant coil 202 are orthogonal in the wireless power transmission system shown in FIG. 1. FIG. 5B shows a simulation result of the power transmission efficiency. The horizontal axis of FIG. 5B represents the frequency (MHz) and the vertical axis thereof represents the power transmission efficiency.

Each vector shown in FIG. 5A indicates the orientation and magnitude of a magnetic field at each point. Comparison of the vector in FIG. 5A and the vector in FIG. 4A shows that the orientation of magnetic fields near the first self-resonant coil 102 and the second self-resonant coil 202 changes. When compared with FIG. 4A, the magnetic field near the second self-resonant coil 202 in FIG. 5A is strong and the electromagnetic coupling coefficient is large. The power transmission efficiency near 24.8 MHz is, as shown in FIG. 5B, about 58%, which shows that, when compared with FIG. 4B, the power transmission efficiency is improved.

According to the wireless power transmission device 1 in the present embodiment, as described above, higher power transmission efficiency can be achieved even if the first self-resonant coil 102 and the second self-resonant coil 202 are installed in positions at right angles by providing the third self-resonant coil 302. Therefore, higher power transmission efficiency can be achieved in a wider range regarding the positions and orientations of the first self-resonant coil 102 and the second self-resonant coil 202.

In the present embodiment, an example in which the central axis 3S of the third self-resonant coil 302 and the central axis 1S of the first self-resonant coil 102 match is described, but the central axis 3S and the central axis 1S may not match perfectly. For example, the central axis 3S of the third self-resonant coil 302 may be parallel to the central axis 1S of the first self-resonant coil 102. Even if the central axis 3S of the third self-resonant coil 302 is not parallel to the central axis of the central axis 1S of the first self-resonant coil 102, it is enough for the central axis 3S to avoid intersecting at right angles to the central axis 1S. For example, the central axes 1S, 3S may be shifted to the extent that the central axis 1S of the first self-resonant coil 102 passes through the third self-resonant coil 302. That is, the third self-resonant coil 302 has only to be arranged on the central axis 1S of the first self-resonant coil 102.

If the third self-resonant coil 302 is arranged on the central axis 1S of the first self-resonant coil 102, it is preferable to arrange the first and third self-resonant coils 102, 302 so that the central axis 3S of the third self-resonant coil 302 and the central axis 1S of the first self-resonant coil 102 are not orthogonal.

It is not preferable that the second self-resonant coil 202 should be arranged on the central axis 1S of the first self-resonant coil 102 with the central axis 2S orthogonal to the central axis 1S.

A coil formed in a planar shape may be used for the first to third self-resonant coils 102 to 302. If a coil in a planar shape is used, the device can be made thinner and so the installation space can be made smaller. Coils having mutually different physical lengths may be used for the first to third self-resonant coils 102 to 302. A self-resonant coil with a longer physical length makes power transmission more efficient. Therefore, if, for example, the second self-resonant coil 202 has a small physical length, power transmission efficiency can be improved by making the physical length of one or both of the first self-resonant coil 102 and the third self-resonant coil 302 larger.

The first to third capacitors 102b to 302b may not be stray capacitances of the first to third power transmitting coils 102a to 302a. For example, capacitors may be provided separately.

Power may be fed to the first self-resonant coil 102 directly from the high-frequency power supply 100 without using the first coil 101. When configured in this manner, a wireless power transmission device in a simpler configuration can be obtained.

The first coil 101 is a coil provided close to the first self-resonant coil 102 and has a function to receive power (energy) from an external power supply to supply the power to the first self-resonant coil 102 through electromagnetic induction and the second coil 201 is a coil provided close to the second self-resonant coil 202 and has a function to receive power from the second self-resonant coil 202 through electromagnetic induction to supply the power to an external load.

A system that supplies power to a personal computer (PC) without the plug of the PC being inserted into an outlet can be considered as an application example when, for example, each self-resonant coil of the wireless power transmission system in FIG. 1 is arranged as shown in FIG. 2. For example, the wireless power transmission device 1 is placed on a desk and the power receiving device 2 is provided in the PC. The wireless power transmission device 1 is provided so that, for example, the central axis 1S of the first self-resonant coil 102 is parallel to the surface on which the PC is placed. For a conventional wireless power transmission system, the first self-resonant coil 102 and the second self-resonant coil 202 are more likely to be orthogonal when the PC is placed on a desk, increasing the possibility of being unable to supply power to the PC. By providing, in addition to the first self-resonant coil 102, the third self-resonant coil 302 on the desk like the wireless power transmission device 1 in the present embodiment, power can be supplied from the wireless power transmission device 1 to the PC regardless of where the PC is placed on the desk.

Power cannot be exchanged if two self-resonant coils are arranged perpendicularly to each other, but power can be exchanged if the self-resonant coils are not arranged perpendicularly. Thus, excluding, in addition to the example shown in FIG. 2, the case when the first self-resonant coil 102 and the second self-resonant coil 202 are orthogonal and also the second self-resonant coil 202 and the third self-resonant coil 302 are orthogonal, power can be transmitted from the first self-resonant coil 102 to the second self-resonant coil 202 regardless of the arrangement of the first to third self-resonant coils 102 to 302.

That the first self-resonant coil 102 and the second self-resonant coil 202 are orthogonal contains both of a case when the second self-resonant coil 202 is arranged on the central axis 1S of the first self-resonant coil 102 and the central axis 1S of the first self-resonant coil 102 and the central axis 2S of the second self-resonant coil 202 are orthogonal and a case when the first self-resonant coil 102 is arranged on the central axis 2S of the second self-resonant coil 202 and the central axis 1S of the first self-resonant coil 102 and the central axis 2S of the second self-resonant coil 202 are orthogonal.

### (First Modification)

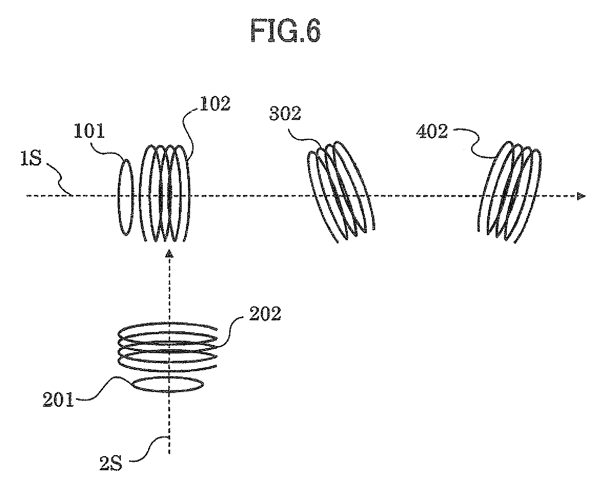

A wireless power transmission device according to a modification of the first embodiment further includes, as shown in FIG. 6, in addition to the first and third self-resonant coils 102, 302, a fourth self-resonant coil 402. The other configuration is the same as the configuration of the wireless power transmission system shown in FIG. 1. The fourth self-resonant coil 402 has the same configuration as the configuration of the third self-resonant coil 302.

The physical relationships of the first to fourth self-resonant coils 102 to 402 will be described. The fourth self-resonant coil 402 is arranged on the central axis 1S of the first self-resonant coil.

Compared with a case when the wireless power transmission device 1 includes two self-resonant coils, that is, the first self-resonant coil 102 and the third self-resonant coil 302, lines of magnetic force linked to the second self-resonant coil 202 of the power receiving device 2 can be increased by providing the fourth self-resonant coil 402. As a result, high power transmission efficiency can be achieved even when the second self-resonant coil 202 is brought closer to the central axis 1S direction. Therefore, high power transmission is enabled in a wider range.

### <Second Embodiment>

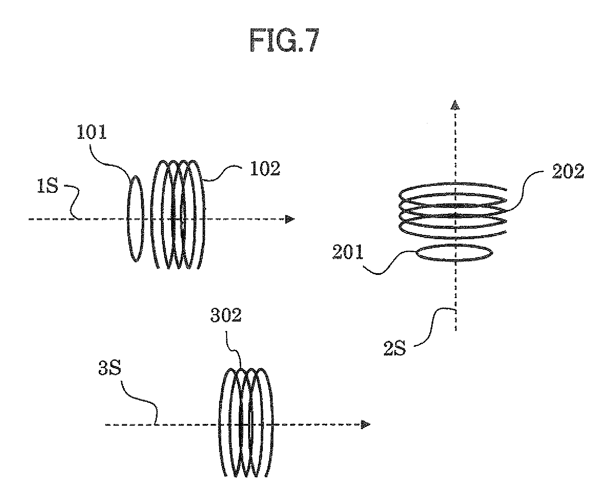

A wireless power transmission system according to the second embodiment of the present invention will be described using FIG. 7. The wireless power transmission system according to the present embodiment has the same configuration as the configuration of the wireless power transmission system shown in FIG. 1 except the arrangement of the first to third self-resonant coils 102 to 302.

In the second embodiment, as shown in FIG. 7, the central axis 1S of the first self-resonant coil 102 and the central axis 3S of the third self-resonant coil 302 are arranged so as to be parallel to each other. The third self-resonant coil 302 is arranged in a position other than the central axis 1S of the first self-resonant coil 102. The second self-resonant coil 202 is arranged on the central axis 1S of the first self-resonant coil 102 in FIG. 7, but the arrangement of the second self-resonant coil 202 is not limited specifically to FIG. 7.

According to the wireless power transmission device in the second embodiment, the orientation of magnetic fields around the first self-resonant coil 102 and the second self-resonant coil 202 can be changed by the third self-resonant coil 302 being provided due to the operation principle similar to the operation principle of the wireless power transmission device in the first embodiment. As a result, high power transmission efficiency can be achieved even when the first self-resonant coil 102 and the second self-resonant coil 202 are placed in positions orthogonal to each other. Therefore, high power transmission is enabled in a wider range regarding the positions and orientation of the first self-resonant coil 102 and the second self-resonant coil 202.

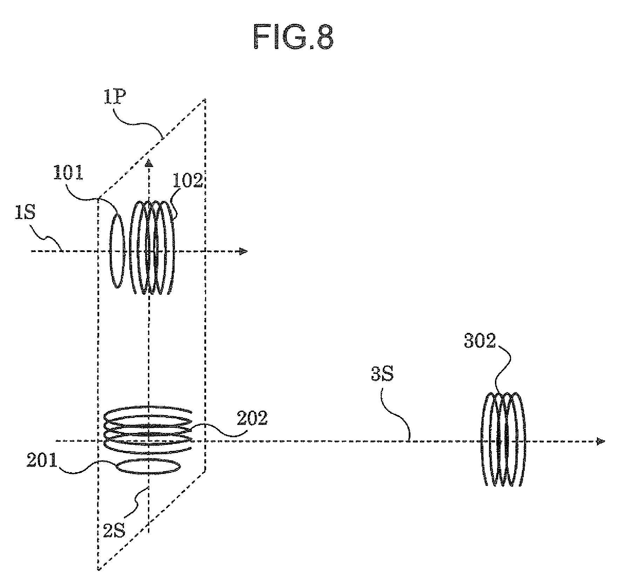

In the present embodiment, it is preferable to arrange the first to third self-resonant coils 102 to 302 while avoiding the arrangement shown in FIG. 8. That is, the arrangement shown in FIG. 8 is an arrangement that satisfies all three conditions below at the same time: The first condition is that the second self-resonant coil 202 provided in the power receiving device 2 is arranged on the central axis 3S of the third self-resonant coil 302. The second condition is that the central axis 2S of the second self-resonant coil 202 is arranged perpendicularly to the central axis 1S of the first self-resonant coil 102 and in a plane 1P containing the first self-resonant coil 102. The third condition is that the central axis 3S of the third self-resonant coil 302 is arranged in a position perpendicular to the central axis 2S of the second self-resonant coil 202.

If these conditions are satisfied, resonance of magnetic fields is less likely to occur between the first self-resonant coil 102 and the second self-resonant coil 202 and between the third self-resonant coil 302 and the second self-resonant coil 202 even if a current flows in the first self-resonant coil 102 and thus, the current induced in the second self-resonant coil 202 is small and power transmission efficiency is low.

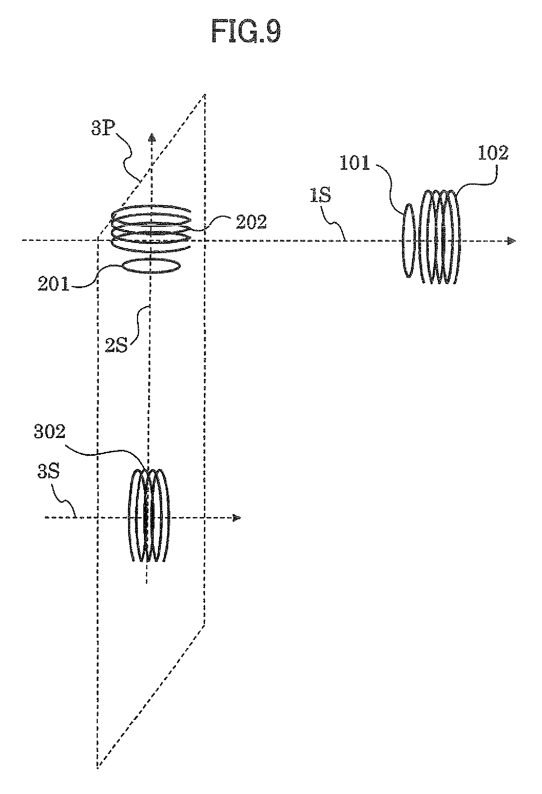

Also in the present embodiment, it is preferable to adopt any configuration other than the configuration shown in FIG. 9. That is, the arrangement shown in FIG. 9 is an arrangement that satisfies all three conditions below at the same time: The first condition is that the second self-resonant coil 202 is arranged on the central axis 1S of the first self-resonant coil 102. The second condition is that the central axis 2S of the second self-resonant coil 202 is arranged perpendicularly to the central axis 3S of the third self-resonant coil 302 and in a plane 3P containing the third self-resonant coil 302. The third condition is that the central axis 2S of the second self-resonant coil 202 is arranged in an orientation perpendicular to the central axis 1S of the first self-resonant coil 102.

Also in this case, the first self-resonant coil 102 and the third self-resonant coil 302 are arranged in a direction perpendicular to the second self-resonant coil 202 and thus, resonance of magnetic fields is less likely to occur and transmission efficiency is low.

Thus, excluding the case when the first self-resonant coil 102 and the second selt-resonant coil 202 are orthogonal and the second self-resonant coil 202 and the third self-resonant coil 302 are orthogonal, power can be transmitted from the first self-resonant coil 102 to the second self-resonant coil 202 regardless of the arrangement of the first to third self-resonant coils 102 to 302. That is, even when, like in the first embodiment, the first self-resonant coil 102 is arranged on the central axis 2S of the second self-resonant coil 202 and the central axis 1S and the central axis 2S are orthogonal, power can be supplied from the first self-resonant coil 102 to the second self-resonant coil 202 by arranging the third self-resonant coil 302 so as not to be orthogonal to the second self-resonant coil 202. Also in the second embodiment, even when the second self-resonant coil 202 is arranged on the central axis 1S of the first self-resonant coil 102 and the central axis 1S and the central axis 2S are orthogonal, power can be supplied from the first self-resonant coil 102 to the second self-resonant coil 202 by arranging the third self-resonant coil 302 so as not to be orthogonal to the second self-resonant coil 202.

### (Second Modification)

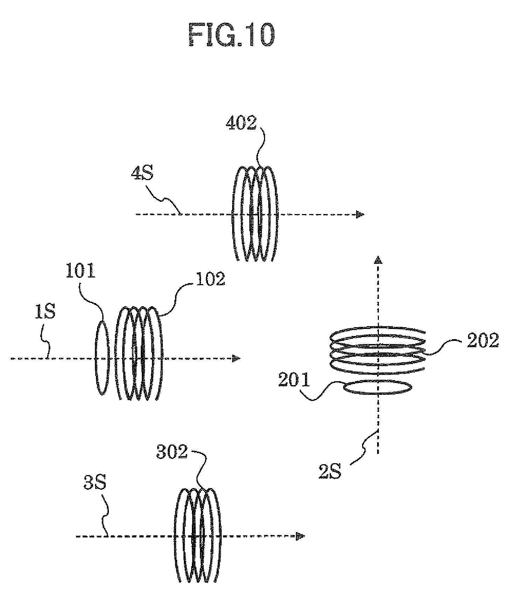

FIG. 10 is a diagram showing an outline configuration of the first to fourth self-resonant coils 102 to 402 according to a modification of the second embodiment.

A wireless power transmission device according to the modification of the second embodiment includes the fourth self-resonant coil 402. The other configuration of the wireless power transmission system is the same as the configuration of the second embodiment.

As shown in FIG. 10, a central axis 4S of the fourth self-resonant coil 402 and the central axis 1S of the first self-resonant coil 102 are arranged in parallel. In addition, the central axis 4S is arranged in a position other than the central axis 1S of the first self-resonant coil 102.

The fourth self-resonant coil 402 is provided, in addition to the first self-resonant coil 102 and the third self-resonant coil 302, in the wireless power transmission device 1.

Therefore, even if resonance of magnetic fields of the first self-resonant coil 102 and the second self-resonant coil 202 is small, resonance of magnetic fields of the third self-resonant coil 302 and the second self-resonant coil 202 and further resonance of magnetic fields of the fourth self-resonant coil 402 and the second shelf-resonant coil 202 occur and thus, power transmission efficiency between the first self-resonant coil 102 and the second self-resonant coil 202 arranged in an orthogonal physical relationship can further be improved.

### <Third Embodiment>

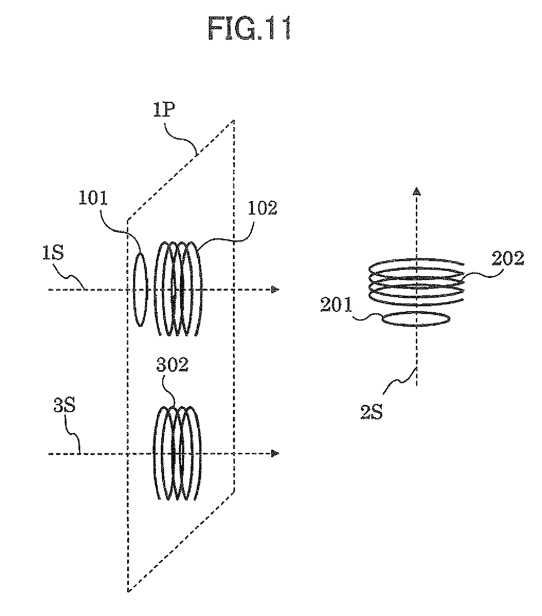

A wireless power transmission system according to the third embodiment of the present invention will be described using FIG. 11. FIG. 11 shows the physical relationship of each self-resonant coil in the third embodiment. The wireless power transmission device includes the first self-resonant coil 102 and the third self-resonant coil 302 and the power receiving device includes the second self-resonant coil 202. The wireless power transmission system shown in FIG. 11 has the same configuration as the wireless power transmission system shown in FIG. 1 excluding the physical relationship of each self-resonant coil.

As shown in FIG. 11, the central axis 1S of the first self-resonant coil 102 and the central axis 3S of the third self-resonant coil 302 are arranged so as to be parallel to each other. The third self-resonant coil 302 is installed so as to be orthogonal to the central axis 1S of the first self-resonant coil 102 and also contained in the plane 1P containing the first self-resonant coil 102.

According to the wireless power transmission device in the third embodiment, the first self-resonant coil 102 and the third self-resonant coil 302 can be installed in the same plane such as a wall surface so that the installation space can be made thinner.

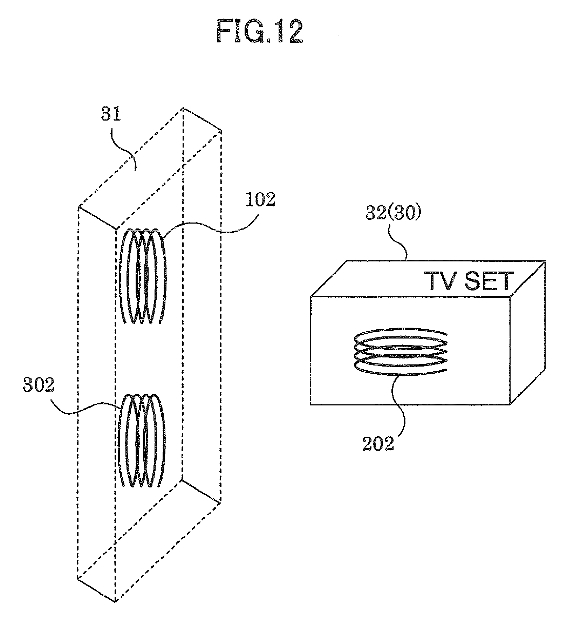

An application example of the wireless power transmission device and power receiving device in the third embodiment is shown in FIG. 12. In FIG. 12, a wireless power transmission device 31 including the first self-resonant coil 102 and the third self-resonant coil 302 is arranged on a wall surface and a power receiving device 32 including the second self-resonant coil 202 is contained and installed in, for example, a TV set 30.

According to the wireless power transmission system in the third embodiment, the same effect as in the first embodiment can be achieved. Also according to the present embodiment, power can be supplied to the TV set 30 even if the second self-resonant coil 202 in the TV set 30 and the first self-resonant coil 102 are orthogonal by arranging the third self-resonant coil 302 on the same, for example, wall surface as the first self-resonant coil 102 so that the degree of freedom of arrangement of the TV set 30 can be improved.

In the present embodiment, however, it is not preferable that the central axis 2S of the second self-resonant coil 202 should be arranged perpendicularly to the central axis 1S of the first self-resonant coil 102 and in the plane 1P containing the first self-resonant coil 102.

### <Fourth Embodiment>

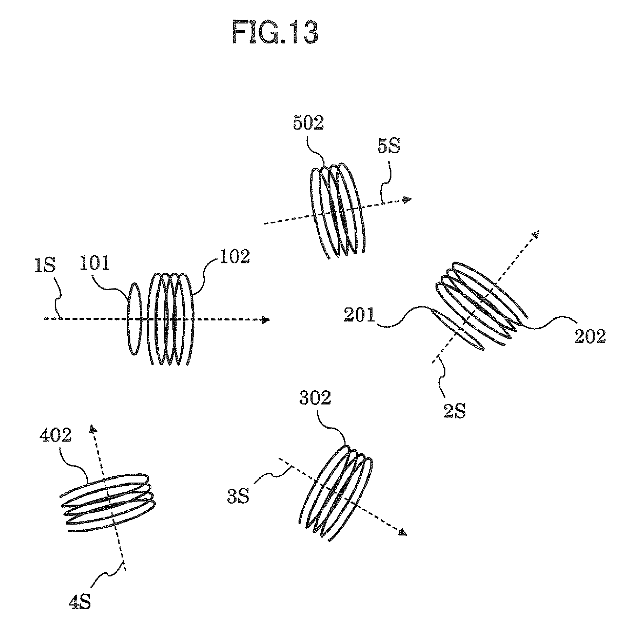

A wireless power transmission system according to the fourth embodiment of the present invention will be described using Fig. 13. FIG. 13 shows the physical relationship of each self-resonant coil in a wireless power transmission device and a power receiving device in the fourth embodiment. The wireless power transmission device includes the first self-resonant coil 102, the third self-resonant coil 302, the fourth self-resonant coil 402, and a fifth self-resonant coil 502 and the power receiving device includes the second self-resonant coil 202. The fourth self-resonant coil 402 and the fifth self-resonant coil 502 have the same structure as the structure of the third self-resonant coil 302 described in the first embodiment.

In the wireless power transmission device according to the present embodiment, as shown in FIG. 13, the first self-resonant coil 102, the third self-resonant coil 302, the fourth self-resonant coil 402, and the fifth self-resonant coil 502 are arranged so that the respective central axes 1S, 3S, 4S, 5S have different orientations.

In the fourth embodiment, a case when the number of self-resonant coils including one in the power receiving device is five is described, but the number thereof may be greater or smaller than five.

In the fourth embodiment, the central axes 1S, 2S, 3S, 4S, 5S of each self-resonant coil are installed so that the orientations thereof are all different, but there is no need for all to be different orientations and only at least two central axes have to have different orientations.

According to the fourth embodiment, the number of self-resonant coils is increased and the central axes thereof are different and so magnetic fields can be changed in a wider range. Particularly the central axes are arranged in different orientations and thus, power can be transmitted with stability by suppressing degradation in power transmission efficiency regardless of the orientation of the central axis 2S of the second self-resonant coil 202 in the power receiving device.

### <Fifth Embodiment>

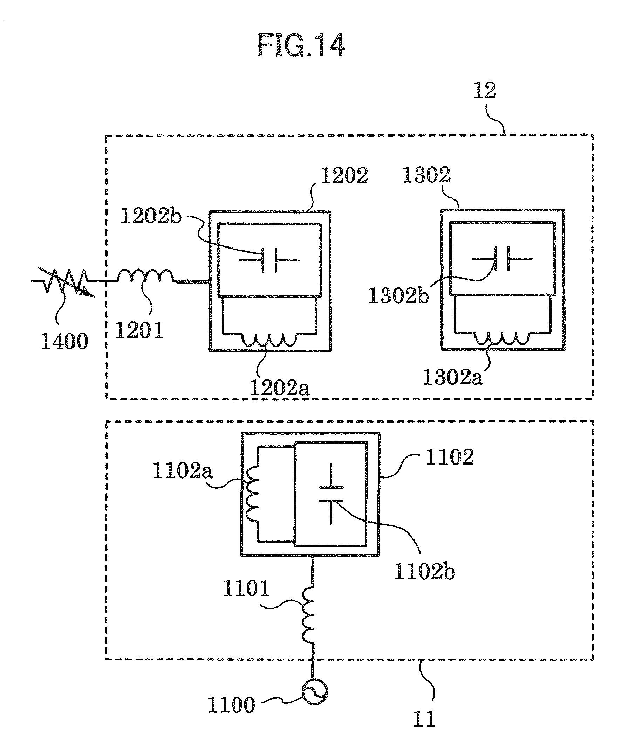

A wireless power transmission system according to the fifth embodiment of the present invention will be described using FIG. 14.

The first to fourth embodiments have described a case when a plurality of self-resonant coils is provided in a wireless power transmission device, but the plurality of self-resonant coils may be provided in a power receiving device.

The wireless power transmission system shown in FIG. 14 includes a wireless power transmission device 11 and a power receiving device 12 to which power (energy) is supplied from the wireless power transmission device 11.

The wireless power transmission device 11 includes a first self-resonant coil 1102. The wireless power transmission device 11 further includes a high-frequency power supply 1100 and a first coil 1101. Incidentally, the high-frequency power supply 1100 may not be included in the wireless power transmission device 1 and may be, for example, an external power supply such as an outlet.

The power receiving device 12 includes second and third self-resonant coils 1202, 1302 and a second coil 1201.

Excluding the fact that the third shelf-resonant coil 1302 is provided in the power receiving device 12, the operation of the wireless power transmission system and the physical relationship of each self-resonant coil are the same as in the first to fourth embodiments and thus, a description thereof is omitted.

Thus, the same effect as in the first to fourth embodiments can be obtained by providing the third self-resonant coil 1302 in the power receiving device 12.

The technology in the first to fifth embodiments can be applied to communication equipment that performs communication by using electromagnetic induction between coils. In this case, there is no need to significantly increase transmission power or reception sensitivity even when communication equipment changes in installation direction and is orthogonal to each other so that communication can be performed with high efficiency.

The present invention is not limited to the above embodiments as they are and structural elements thereof can be modified and embodied without deviating from the scope thereof in the stage of working. Also, various inventions can be formed by appropriately combining a plurality of structural elements disclosed in the above embodiments. For example, some structural elements may be deleted from all structural elements disclosed in an embodiment. Further, structural elements extending over different embodiments may appropriately be combined.

### REFERENCE SIGNS LIST

1, 11, 31: Wireless power transmission device; 2, 12, 32: Power receiving device; 100, 1100: High-frequency power supply; 101, 1101: First coil; 102, 1102: First self-resonant coil; 102a, 1102a: First power transmitting coil; 102b, 1102b: First capacitor; 201, 1201: Second coil; 202, 1202: Second self-resonant coil; 202a, 1202a: Second power transmitting coil; 202b, 1202b: Second capacitor; 302, 1302: Third self-resonant coil; 302a, 1302a: Third power transmitting coil; 302b, 1302b: Third capacitor; 400, 1400: Load circuit; 401: Fourth self-resonant coil; 501: Fifth self-resonant coil; 30: TV set

## Claims

1. A wireless power transmission device that supplies power to a power receiving device including a second self-resonant coil having a winding structure in which a conductive wire is wound one turn or more perpendicularly to a second central axis, the wireless power transmission device comprising:
a first self-resonant coil having the winding structure in which the conductive wire is wound one turn or more perpendicularly to a first central axis to supply the power to the second self-resonant coil that is not located on the first central axis; and
a third self-resonant coil having the winding structure in which the conductive wire is wound one turn or more perpendicularly to a third central axis that is not perpendicular to the first central axis and arranged on the first central axis.

2. The wireless power transmission device according to claim 1, wherein the third central axis is parallel to or matches the first central axis.

3. A wireless power transmission device that supplies power to a power receiving device including a second self-resonant coil, comprising:
a first self-resonant coil having a winding structure in which a conductive wire is wound one turn or more perpendicularly to a first central axis to supply the power to the second self-resonant coil; and
a third self-resonant coil having the winding structure in which the conductive wire is wound one turn or more perpendicularly to a third central axis and installed in a position other than the first central axis.

4. The wireless power transmission device according to claim 3, wherein
the third central axis is parallel to the first central axis and
the third self-resonant coil is arranged perpendicularly to the first central axis and in a plane containing the first self-resonant coil.

5. The wireless power transmission device according to claim 4, wherein the first self-resonant coil supplies the power to a second self-resonant coil that is not arranged in the plane.

6. A wireless power transmission device that supplies power to a power receiving device including a second self-resonant coil, comprising:
a first self-resonant coil having a winding structure in which a conductive wire is wound one turn or more perpendicularly to a first central axis to supply the power to the second self-resonant coil; and
a plurality of third self-resonant coils having the winding structure in which the conductive wire is wound one turn or more perpendicularly to mutually different third central axes.

7. A wireless power transmission device that supplies power to a power receiving device including a second self-resonant coil having a winding structure in which a conductive wire is wound one turn or more perpendicularly to a second central axis, the wireless power transmission device comprising:
a first self-resonant coil having the winding structure in which the conductive wire is wound one turn or more perpendicularly to a first central axis to supply the power to the second self-resonant coil; and
a third self-resonant coil having the winding structure in which the conductive wire is wound one turn or more perpendicularly to a third central axis to transmit the power supplied from the first self-resonant coil to the second self-resonant coil, wherein
the first and third self-resonant coils transmit the power to the second self-resonant coil arranged in a position that is not perpendicular to the first self-resonant coil or the third self-resonant coil.

8. A power receiving device that receives power from a wireless power transmission device including a first self-resonant coil having a winding structure in which a conductive wire is wound one turn or more perpendicularly to a first central axis, the power receiving device comprising:
a third self-resonant coil having the winding structure in which the conductive wire is wound one turn or more perpendicularly to a third central axis to receive the power from the first self-resonant coil; and
a second self-resonant coil having the winding structure in which the conductive wire is wound one turn or more perpendicularly to a second central axis to receive the power from the first and third self-resonant coils, wherein
the second and third self-resonant coils receive the power from the first self-resonant coil arranged in a position that is not perpendicular to the second self-resonant coil or the third self-resonant coil.
